**Europäisches Patentamt**

**European Patent Office**

**Office européen des brevets**

(19)

(11) Veröffentlichungsnummer: **0 056 276**
A2

(12) ## EUROPÄISCHE PATENTANMELDUNG

(21) Anmeldenummer: **82100165.8**

(22) Anmeldetag: **12.01.82**

(51) Int. Cl.³: **B 29 D 27/00**, B 29 D 27/02, C 08 J 9/00, B 29 D 9/00, B 32 B 31/30

(30) Priorität: **12.01.81 DE 3100665**

(43) Veröffentlichungstag der Anmeldung: **21.07.82** Patentblatt 82/29

(84) Benannte Vertragsstaaten: **AT BE CH DE FR GB IT LI LU NL SE**

(71) Anmelder: **Spiritini, Cuno, Südtirolerstrasse 1, D-8390 Passau (DE)**
Anmelder: **Spiritini, Olga, Südtirolerstrasse 1, D-8390 Passau (DE)**
Anmelder: **Spiritini, Massimo, Südtirolerstrasse 1, D-8390 Passau (DE)**

(72) Erfinder: **Plien, Roland, Karolinenstrasse 8, D-6730 Neustadt/Weinstrasse (DE)**

(74) Vertreter: **Hansen, Bernd, Dr.rer.nat. et al, Hoffmann. Eitle & Partner Patentanwälte Arabellastrasse 4, D-8000 München 81 (DE)**

(54) **Geschäumtes Niederdruck-Polyäthylen, Verfahren zur Herstellung desselben, sowie dessen Verwendung.**

(57) Die Erfindung betrifft ein geschäumtes Niederdruckpolyethylen, welches gegebenenfalls einen Zusatz an Ethylen/Vinylacetat-Copolymer (EVA) oder linearem Polyethylen· mittlerer Dichte (LLDPE) enthält, und mit einem in der Wärme zersetzbaren Treibmittel geschäumt wird.

Die Schwierigkeiten der Verfahrensführung werden durch die erfindungsgemäßen Merkmale überwunden, wonach in einem adiabatischen Extruder zwischen Schneckenspitze und Sieb infolge der aufeinander abgestimmten Einstellung von Förder- und Leckströmung der sich ausbildende Wirbeldruck konstant und die Temperatur am Sieb gegenüber der Schneckentemperatur niedriger gehalten wird.

Die aus dem geschäumten Polyethylen hergestellten Folien weisen eine relativ hohe Stabilität sowie ausgezeichnete dampfsperrende und kälte- bzw. wärmeisolierende Eigenschaften auf. Sie finden insbesondere als Beutel für den Transport von gefrorenen oder erwärmten Nahrungsmitteln etc. Verwendung.

Das erfindungsgemäße Verfahren umfaßt in weiteren Ausführungsformen die Herstellung von Zweischicht-Folien im Koextruder sowie unter Verwendung eines Haftvermittlers nach dem Kaschierverfahren.

EP 0 056 276 A2

0056276

- 1 -

Geschäumtes Niederdruck-Polyethylen, Verfahren zur Herstellung desselben, sowie dessen Verwendung

Die Erfindung betrifft ein geschäumtes Niederdruck-Polyethylen (NDPE) aus NDPE oder einem Gemisch aus NDPE und Ethylen/Vinylacetat-Copolymer (EVA) oder einem Gemisch aus NDPE und linearem PE mittlerer Dichte (LLDPE) und einem in der Wärme zersetzbaren Treibmittel, sowie ein Verfahren zur Herstellung desselben.

Es ist bekannt, Folien für Beutel, Tüten, etc., aus Polyethylen niederer Dichte (LDPE), d.h. mit einer spezifischen Dichte von 0,89 bis 0,92, herzustellen. Die Herstellung erfolgt dabei meist in einem Extruder mit einer Schneckenlänge von ca. 22 D. Für dieses Material ist die genannte Extruderlänge erforderlich, da dieses bereits bei niedrigeren Temperaturen schmilzt. Das auf diese Weise hergestellte Material zeichnet sich nicht durch eine besonders hohe Stabilität aus, so dass die Folien, welche zu Beuteln etc. verarbeitet werden, in einer Dicke von mindestens ca. 40µm hergestellt werden müssen.

Es sind auch Verfahren zur Herstellung von nichtgeschäumter Blas- und Schlauchfolie aus Niederdruck-Polyethylen (NDPE) bekannt.

In der FR-PS 1 417 509 wird die Herstellung eines geschäumten Niederdruck-Polyethylens unter Verwendung verschiedener Zusätze, wie Vernetzungsmittel, Füllstoffe, etc., beschrieben, wobei jedoch in einem diskontinuierlichen Verfahren, d.h. im Spritzgussverfahren, gearbeitet wird und steife Produkte erhalten werden.

In der DE-OS 20 61 121 wird ein Verfahren zur Herstellung von Polyolefinschaumstoffen beschrieben, wobei ein Gemisch aus Polymeren, unter anderem Polyethylen, eingesetzt und ein Material offenzelliger Struktur erhalten wird.

Ausserdem ist die Herstellung eines geschäumten Niederdruck-Polyethylens mit einem geringen Prozentsatz an Azodikarbonamid als Treibmittel bekannt, wobei ein

- 3 -

offenzelliges Material erhalten wird, das als Ersatz
für Seidenpapier Verwendung findet.

Niederdruck-Polyethylen wird vornehmlich im adiabatischen Extruder extrudiert. Dabei müssen Kompressionszone, Fliesszone und Fliesswege im Kopf oder in der Führung des Kopfes auf das NDPE abgestimmt sein.

Die Verfahrensweise ist beim Extrudieren von NDPE aufgrund der im Extruder entstehenden hohen Fliessdrücke schwieriger als beim Extrudieren von Polyethylen niederer Dichte. So ist es z.B. bei dem Verfahren mit NDPE erforderlich, dass ein speziell geeigneter Blaskopf sowie eine spezielle Schnecke zur Verfügung stehen.

Aufgabe der vorliegenden Erfindung ist es, ein geschlossenzelliges, geschäumtes Niederdruck-Polyethylen zur Verfügung zu stellen, das hinsichtlich seiner Dampf- und Wärmesperre den dafür üblicherweise verwendeten Materialien überlegen ist und auch bei geringen Foliendicken eine relativ hohe Stabilität aufweist.

Eine weitere Aufgabe der Erfindung ist es, ein Verfahren zur Herstellung eines geschäumten Niederdruck-Polyethylens zur Verfügung zu stellen, wonach ein relativ dicker Schaum mit kleinen geschlossenen Poren extrudiert werden kann. Wichtig ist dabei, dass es nach dem erfindungsgemässen Verfahren vermieden wird, dass Löcher in der Schlauchfolie entstehen, was dazu führen kann, dass während des Extrudierens die Blase zusammenfällt.

Die vorstehende Aufgabe wird dadurch gelöst, dass ein geschlossenzelliges, geschäumtes Niederdruck-Polyethylen zur Verfügung gestellt wird, welches dadurch erhältlich ist, dass in einem Extruder

(a)     zwischen Schneckenspitze und Sieb der sich ausbildende Wirbeldruck infolge der Einstellung von Förder- und Leckströmung konstant, und

(b)     die Temperatur am Sieb gegenüber der Schneckentemperatur niedriger gehalten wird.

Ausserdem wird gemäss der Erfindung ein Verfahren zur Herstellung von geschlossenzelligem, geschäumten Niederdruck-Polyethylen zur Verfügung gestellt.

Die Erfindung umfasst auch die Verwendung des geschäumten Niederdruck-Polyethylens zur Herstellung von Folien für Beutel und Tüten, welche sich aufgrund ihrer vergleichsweise guten Dampf- und Wärmesperre insbesondere zum Transportieren von gefrorenen oder erwärmten Nahrungsmitteln eignen. Ausserdem finden die erfindungsgemäss hergestellten geschäumten Niederdruck-Polyethylen-Folien als Dämmstoffmaterial in der Bauindustrie Verwendung.

Unter der Bezeichnung "Niederdruck-Polyethylen" (NDPE) ist ein Polyethylen hoher Dichte zu verstehen. Insbesondere eignet sich hierfür ein Polyethylen mit einer spezifischen Dichte von 0,94 bis 0,98, vorzugsweise 0,95. Der Schmelzindex des eingesetzten Rohstoffes liegt zwischen 0,3 und 2,2, vorzugsweise bei 0,4. Das Molekulargewicht des erfindungsgemäss verwendeten NDPE beträgt 1 bis 2 x 10$^5$, vorzugsweise 1,5 x 10$^5$.

Gemäss der Erfindung kann das Niederdruck-Polyethylen eine Beimischung von bis zu 30 % Ethylen/Vinylacetat-Copolymer (EVA) enthalten. Auf diese Weise ist es möglich, eine weichere Folie zu erhalten.

Ausserdem ist es gemäss der Erfindung vorgesehen, das NDPE ganz oder zu einem Teil durch lineares Polyethylen mittlerer Dichte (LLDPE) zu ersetzen. Bei diesem Ausgangsgemisch ist es möglich, stabile Folien zu erhalten, die über eine verhältnismässig hohe Dampf- und Wärmesperre verfügen. Bei einem Verfahren, das ein derartiges Gemisch verwendet, müssen die erfindungsgemäss angegebenen Temperaturbereiche um ca. 30°C herabgesetzt werden.

Auch Mischungen von NDPE und linearem PE mittlerer Dichte (LLDPE) eignen sich für die Herstellung geschäumter Folien nach dem erfindungsgemässen Verfahren.

Als ein in der Wärme zersetzbares Treibmittel kann gemäss der Erfindung jedes beliebige geeignete Treibmittel verwendet werden. Besonders geeignet ist der Einsatz von Azodikarbonamid, welches im Handel als ein Gemisch, bestehend aus 30 % Azodikarbonamid und ca. 70 % Polyethylen niederer Dichte (LDPE),erhältlich ist.

Das Treibmittel Azodikarbonamid wird in einer Menge von 1 bis 2 %, bezogen auf die kommerzielle Mischung, zugegeben. Der maximale Bereich des zugegebenen Azodikarbonamids beträgt 0,5 bis 2,5 %. Umgerechnet auf reines Azodikarbonamid beträgt die Menge desselben gegenüber dem Polymeranteil 0,15 bis 0,75 %.

Bei einem Zusatz von unter 0,5% Azodikarbonamid, bezogen auf das im Handel erhältliche Gemisch, erhält man keinen Schaum, sondern erreicht lediglich ein Aufblähen der Folien, was aber nur an der Oberfläche geschieht. Setzt man dagegen mehr als 2,5 % Azodikarbonamid als Treibmittel ein, so tritt ein Überschäumen ein, was die Weiterverarbeitung schwierig, wenn nicht unmöglich macht.

Ausserdem ist es möglich, dem Gemisch Antistatika, Pigmente, Farbstoffe, Füllstoffe, wie Kalziumverbindungen, etc., beizumengen.

Für die Zugabe von Farbstoffen können als Masterbatch alle Farbmasterbatches problemlos eingesetzt werden, vorausgesetzt, das Masterbatch wird bereits bei Temperaturen unter 180°C aufgeschmolzen und homogenisiert.

Für die Zugabe von Füllstoffen eignet sich insbesondere Kalziumkarbonat, wodurch eine bessere Bedruckbarkeit der Folie erreicht und gegebenenfalls eine etwas grossporigere Folienstruktur erhalten wird.

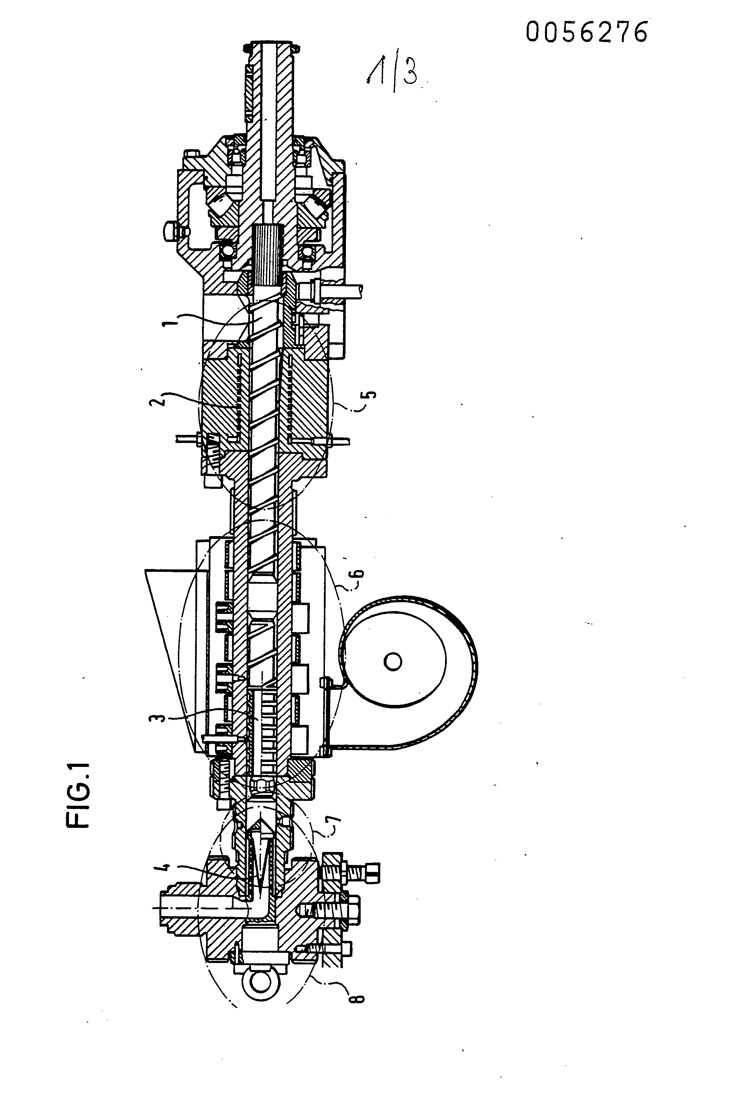

Fig. 1    ist eine schematische Darstellung des erfindungsgemäss verwendeten Extruders. Darin bedeuten 1 die Einzugszone, 2 die Kühlbüchse, 3 die Schnecke, 4 den Siebdorn, 5 die Kühlzone, 6 die Schneckenheizzone, 7 den Stauraum mit Wirbelströmung und 8 die Zone der Umlenkung und des Siebwechslers.

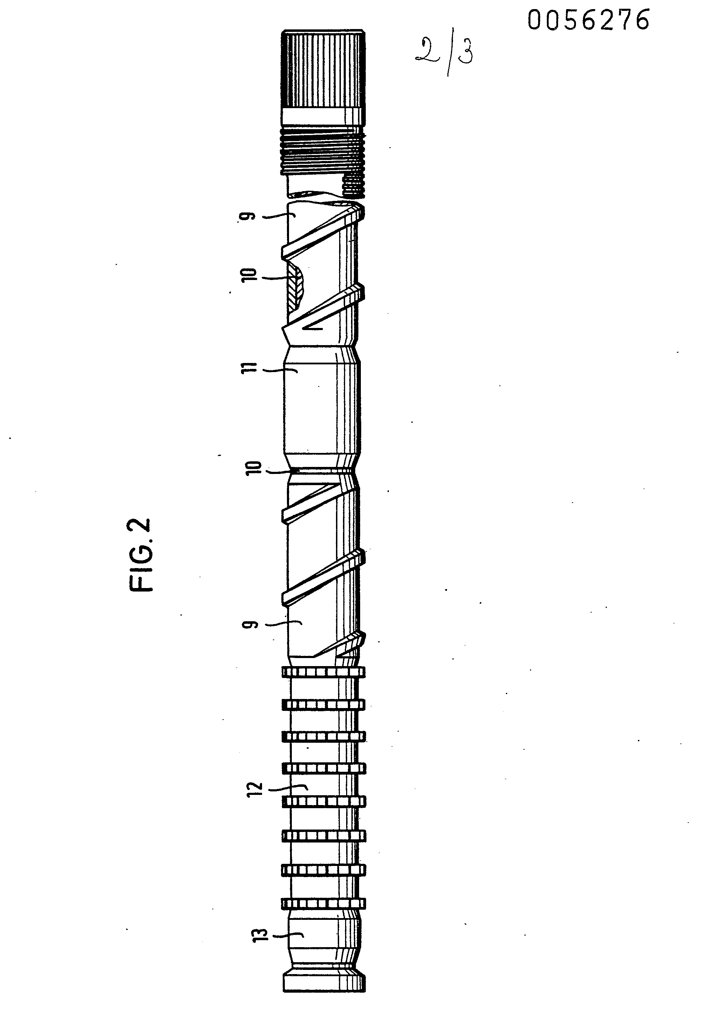

Fig. 2    zeigt eine adibiatische Extruderschnecke. Hierin bedeuten 9 die Förderteile, 10 das Demontagegewinde, 11 das Mischteil mit gegenläufigem Vermischgewinde, 12 ein langes Mischteil und 13
das Stauteil.

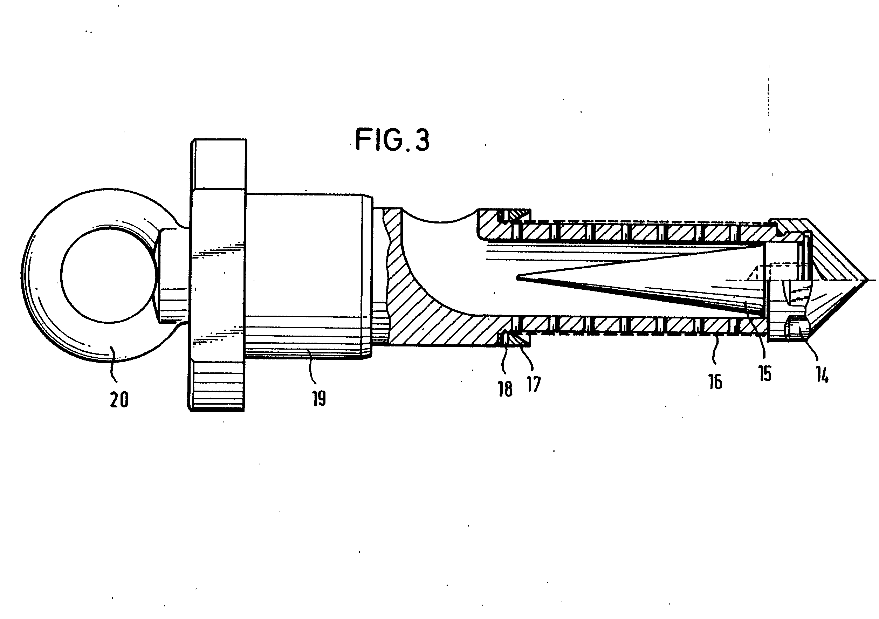

Fig. 3    zeigt einen Siebwechsler mit Hohlzylindersieb.
Hierin bedeuten 14 den Masseverteilungskegel,
15 den Masseführungskegel, 16 das Sieb, 17 den
Masseführungsring, 18 die Befestigungsstifte, 19
das Abdichtteil und 20 den Ausziehhaken.

Dem erfindungsgemässen Verfahren geht die Mischung der Komponenten vor der Zugabe in den Extruder voraus.

Zur Durchführung des erfindungsgemässen Verfahrens dient
vornehmlich ein adibiatischer Extruder, welcher mit verschiedenen Heizzonen ausgestattet ist. Vorzugsweise wird ein Extruder mit fünf Heizzonen verwendet, welche die Temperaturen
$T_1$, $T_2$, $T_3$, Siebtemperatur und Schneckentemperatur aufweisen.
Im übrigen kann auch ein Extruder mit einer darüber- oder
darunterliegenden Anzahl von Heizzonen verwendet werden.

Das Verhältnis L/D der Extruderschnecke beträgt vorzugsweise 18.

Der verfahrenstechnisch wichtigste Faktor gemäss dem erfindungsgemässen
Verfahren ist die Temperaturführung, da hierdurch nicht nur die Schmelzviskosität, sondern auch der Druck vor dem Sieb variiert werden können.
Durch die erfindungsgemäss vorgeschlagene Temperaturführung werden die
Merkmale, wie sie in den Ansprüchen 1 bis 13 beansprucht sind, erreicht.
Insbesondere wird gemäss der Erfindung zwischen Schneckenspitze und Sieb
infolge der aufeinander abgestimmten Einstellung von Förder- und Leckströmung der sich ausbildende Wirbeldruck konstant gehalten. Bei der Herstellung der erfindungsgemässen Folie erfolgt eine vom üblichen Verfahren
abweichende Temperaturführung.

Die Einzugszone 1 muss um 15 bis 25, vorzugsweise 16 bis 20°C niedriger als üblich eingestellt werden. Die Temperatur in der Einzugszone beträgt 20 bis 40°C, vorzugsweise 25°C. Nur so ist ein gleichmässiger Einzug des Materials gewährleistet, ohne zu hohe Friktionen zu erzeugen.

Ausserdem muss die Nutbuchse auf ca. 25°C (Kühlwasseraustrittstemperatur) heruntergekühlt werden.

In der Schmelze bildet sich an der Einführungsstelle der Mischung aufgrund des Dralles, welcher der Richtung der Schneckenumdrehung entgegengesetzt ist, ein Staudruck. Dadurch wird eine Homogenisierung und Druckerhöhung erreicht. Daraufhin entspannt sich das Ganze. In der nächsten Strecke erfolgt eine Erwärmung. Die Temperatur der Schnecke beträgt dabei 300 bis 245°C, vorzugsweise 216 bis 240°C.

Im letzten Teil der Schnecke wird mit einem Mischteil nochmals gemischt. Am Ende der Schnecke erfolgt nochmals ein stärkerer Druckanstieg. Dabei wird die Masse herausgedrückt und geht in das Sieb 16 hinein.

Der wichtigste Temperaturabschnitt liegt vor und innerhalb des Siebbereiches. Hier kann eine Temperaturdifferenz von 5°C zu einem völlig anderen, unerwünschten Ergebnis führen. Vom Austritt aus der Schnecke bis zum Sieb müssen eine absolut konstante Strömungsgeschwindigkeit und ein konstanter Druck herrschen. Dies wird erreicht, indem die Temperatur im Sieb gegenüber der Schneckentemperatur kälter gehalten wird. Dadurch ergibt sich eine erhöhte Leckströmung auf der Siebseite zur Schnecke hin. Der entstehende Wirbeldruck sorgt dafür, dass der Druck im Sieb gleichmässig ist. Der zwischen Schneckenspitze und Sieb herrschende Druck muss absolut konstant sein. Die Siebtemperatur darf, je nach Verschmutzung des Siebes, nur zwischen 180 bis 220$^{\circ}$C, vorzugsweise 186 bis 200$^{\circ}$C variieren.

Nach dem Sieb erfolgt die Umlenkung. Diese Strecke wird noch kälter gehalten als das Sieb, um ein Überströmen des Siebes zu vermeiden. Die Temperatur der Umlenkung muss der jeweiligen Siebtemperatur angepasst werden. Die Temperaturen dürfen hier nur zwischen 180 bis 205$^{\circ}$C, vorzugsweise zwischen 185 bis 195$^{\circ}$C, liegen.

Die Temperaturabhängigkeit von Schnecke/Sieb und Umlenkung ist so wichtig, weil nur durch die erfindungsgemäss vorgesehene Temperaturführung ein gleichmässiger Wirbeldruck vor dem Sieb erreicht wird. Dadurch tritt die Schäumung bereits direkt vor dem Sieb ein und nicht - wie herkömmlich - in der Schnecke oder im Kopf (Extruderwerkzeug). Der durch Leckströmung und Förderströmung erzeugte Wirbeldruck muss im Bereich zwischen Schneckenende und Sieb immer gleichmässig gehalten werden. Nur damit wird der gleichmässige Austrag der bereits geschäumten Masse durch das Sieb in das Extrusionswerkzeug gewährleistet.

Das Extrusionswerkzeug (Kopf) ist in zwei Heizzonen aufgeteilt. Die Temperaturen in diesem Bereich müssen langsam steigend gegen die Düse (Bügelzone) sein. In den genannten Zonen liegen die Temperaturen vorzugsweise zwischen 200 und 215°C. Es herrschen somit langsam ansteigende Temperaturen bis zum Düsenaustritt, welche maximal bei 230°C liegen können.

Bei den genannten Temperaturen und der beschriebenen Verfahrensweise erfolgt keine Gelbverfärbung des Materials durch Azodikarbonamid.

Die verschiedenen Temperaturangaben beziehen sich insbesondere auf die Verarbeitung von NDPE als Rohmaterial. Bei der Verarbeitung von linearem PE mittlerer Dichte liegen die Temperaturen jeweils um ca. 30°C niedriger.

Bei der nach dem erfindungsgemässen Verfahren hergestellten Folie ist die mechanische Festigkeit der Schaumfolie relativ unabhängig vom Aufblasverhältnis. Dies bedeutet, dass entgegen den herkömmlichen Blasverfahren bei dem erfindungsgemässen Verfahren das Aufblasverhältnis ohne Bedeutung für die mechanische Festigkeit der Folie ist. Im weiteren ist bei der Durchführung des erfindungsgemässen Verfahrens zu beachten, dass die Kühlstrecke (zwischen Frostlinie und Abzug) relativ gross gehalten werden muss.

Ein weiterer sehr wesentlicher Faktor nach dem erfindungsgemässen Verfahren ist, dass die Schneckenumdrehung, entgegen der bei normaler Folienherstellung üblichen Drehzahl von 95 bis 300 Upm, nur im Bereich von 100 bis 180 Upm, vorzugsweise 140 Upm, liegen darf.

Die unter Anwendung des erfindungsgemässen Verfahrens hergestellten Folien weisen eine vergleichsweise hohe Wasserdampf- und Thermosperre auf. Sie sind aus diesem Grunde besonders geeignet für die Herstellung von Beuteln etc. zum Transportieren von gefrorenen oder erwärmten Dingen, insbesondere Lebensmitteln. Diese Eigenschaften der erfindungsgemässen, geschäumten Niederdruck-Polyethylen-Folie basieren insbesondere auf deren geschlossenzelliger Struktur. Im übrigen weist die Folie ein lederartiges Aussehen auf. Ihr Griff ist weich und lederartig. Die Folie ist flexibel, gut bedruckbar und sie kann verschweisst oder durch die Methode des Heissiegelns verarbeitet werden.

Die erfindungsgemässe geschäumte NDPE-Folie weist eine erhöhte Stabilität auf. Aus diesem Grunde ist für die Herstellung von Beuteln und Tüten eine Foliendicke von ca. 15 bis 35 µm, vorzugsweise 25 µm, ausreichend.

Ausführungsbeispiel 1

Herstellung von geschäumtem Niederdruck-Polyethylen:

Es wurde ein Niederdruck-Polyethylen mit einem spezifischen Gewicht g = 0,952, dem Schmelzindex MFI 190/5 = 0,4, einem mittleren Molekulargewicht $\overline{M}$ 1,5 x $10^5$,

einer Wärmeleitfähigkeitszahl $\lambda$(Kcal/m-h-grd) = 0,46 und einer Wasserdampf- und Gasdurchlässigkeit (g/m² · 24 h) von 0,5 bis 0,9 (bei 20°C und 85 % relativer Feuchte) verarbeitet. Das Treibmittel, von welchem 1,5 %, bezogen auf den Anteil an NDPE, zugegeben wurden, bestand aus einem kommerziell erhältlichen Batch aus 30 % Azodikarbonamid und ca. 70 % LDPE, g = 0,92, MFI 190/2,16 = 18 bis 22.

Es wurde in einem adiabatischen Extruder mit fünf Heizzonen (T1, T2, T3, Siebtemperatur und Schneckentemperatur) gearbeitet.

Die Schneckentemperatur betrug 216 °C.

Die Schnecke wurde mit 140 Upm geführt.

Die Temperatur am Sieb wurde bei diesem Versuch auf 186 ± 2°C eingestellt.

In der Umlenkung herrschte eine Temperatur von 188°C.

Die Nutbuchse wurde auf 25°C (Kühlwasseraustrittstemperatur) heruntergekühlt.

Aufgrund dieser Temperaturführung wurde in dem Bereich von der Schneckenspitze bis zum Sieb der sich ausbildende Wirbeldruck konstant gehalten. Der in diesem Bereich herrschende Druck betrug ca. 350 bis 600 bar.

Beim Extrudieren des Materials in Form eines Schlauches wurde eine Folie geschlossenzelliger Struktur erhalten, so dass die entstehende Blase aufrechterhalten werden konnte und diese nicht etwa in sich zusammenfiel.

Die aus diesem Material hergestellten Beutel wiesen eine relativ hohe mechanische Stabilität auf. Bei einer Foliendicke von 25 µm wiesen die Beutel eine Stabilität auf, die der einer 40 µm dicken Folie aus geschäumtem Hochdruck-Polyethylen entsprach. Messungen zeigten, dass die aus dem geschäumten Niederdruck-Polyethylen hergestellten Beutel eine ausserordentlich hohe Wasserdampf- und Thermosperre aufwiesen.

Ausführungsbeispiel 2
─────────────────────

Herstellung einer Zweischicht-Folie in einem Koextruder, welche in einem Arbeitsgang extrudiert wird:

Es wurde in einem Extruder gearbeitet, der von zwei Seiten her mit Niederdruck-Polyethylen beschickt wurde.

Während auf der einen Seite geschäumtes NDPE extrudiert wurde, erfolgte auf der anderen das Extrudieren von normalem, nach dem Stand der Technik bekannten NDPE.

Die Versuche ergaben, dass es vorteilhaft ist, das geschäumte NDPE aussen und das übliche NDPE innen zu verarbeiten. Im übrigen ist aber auch eine Umkehrung der beiden Schichten möglich.

Ausserdem können bei diesem Verfahren der Herstellung von Zweischicht-Folien neben dem geschäumten NDPE auch Polyamide oder modifizierte EVA-Folien verarbeitet werden. Bei diesem Verfahren ist das entstehende Material beim Austritt aus der Düse bereits koextrudiert.

Die Vorteile der Zweischicht-Folie bestehen in einer erhöhten Stabilität und einer noch höheren Dampf- und Wärmesperre. Die auf diese Weise hergestellten Folien verfügen über besonders hohe feuchtigkeitsabweisende Eigenschaften sowie über besondere aromaerhaltende Eigenschaften.

Ausführungsbeispiel 3

Kaschieren von Folien:

Bei diesem Verfahren wurde geschäumtes und im Blasfolienverfahren hergestelltes NDPE unter Verwendung eines geeigneten Haftvermittlers nachträglich mit verschiedenen anderen Folien kaschiert.

Die sich auf diese Weise ergebenden Vorteile liegen insbesondere darin, dass das erfindungsgemässe Verfahren ohne Modifikation durchgeführt werden kann und erst später die geschäumte NDPE-Folie mit einem anderen Material kaschiert wird.

Es werden dabei die im Ausführungsbeispiel 2 genannten Vorteile erreicht. Unter Anwendung dieses Verfahrens können auch Folien kaschiert werden, welche im Extrusionsverfahren nicht hergestellt werden können.

0056276

<u>Patentansprüche:</u>

1. Geschäumtes Niederdruck-Polyethylen (NDPE) aus NDPE oder einem Gemisch aus NDPE und Ethylen/ Vinylacetat-Copolymer (EVA) oder einem Gemisch aus NDPE und linearem PE mittlerer Dichte (LLDPE) und einem in der Wärme zersetzbaren Treibmittel, dadurch erhältlich, dass in einem Extruder

   (a)     zwischen Schneckenspitze und Sieb infolge der Einstellung von Förder- und Leckströmung der sich ausbildende Wirbeldruck konstant, und

(b)        die Temperatur am Sieb gegenüber der Schneckentemperatur niedriger gehalten wird.

2.  Geschäumtes NDPE gemäss Anspruch 1, dadurch erhältlich, dass das Schäumen in einem adiabatischen Extruder erfolgt.

3.  Geschäumtes NDPE gemäss Ansprüchen 1 und 2, dadurch erhältlich, dass das NDPE ganz oder teilweise durch lineares PE mittlerer Dichte (LLDPE) ersetzt wird.

4.  Geschäumtes NDPE gemäss Ansprüchen 1 und 2, dadurch erhältlich, dass das NDPE bis zu 30 % durch EVA ersetzt ist.

5.  Geschäumtes NDPE gemäss Ansprüchen 1 bis 4, dadurch erhältlich, dass als Treibmittel Azodikarbonamid verwendet wird.

6.  Geschäumtes NDPE gemäss Anspruch 5, dadurch erhältlich, dass die Konzentration von reinem Azodikarbonamid 0,15 bis 0,75 % beträgt.

7.  Geschäumtes NDPE gemäss Ansprüchen 1 bis 6, dadurch erhältlich, dass die Temperatur in der Einzugszone  20 bis  40°C, vorzugsweise 25°C beträgt.

8.  Geschäumtes NDPE gemäss einem oder mehreren der vorangehenden Ansprüche, dadurch erhältlich, dass die Schnecke auf 200 bis 245°C erwärmt wird.

9. Geschäumtes NDPE gemäss Anspruch 8, dadurch erhältlich, dass die Schnecke auf 216$^{\circ}$C erwärmt wird.

10. Geschäumtes NDPE gemäss einem oder mehreren der vorangehenden Ansprüche, dadurch erhältlich, dass die Schneckentemperatur in der Richtung zum Sieb hin abfallend ist.

11. Geschäumtes NDPE gemäss einem oder mehreren der vorangehenden Ansprüche, dadurch erhältlich, dass die Temperatur am Sieb 180 bis 220°C, vorzugsweise 186 bis 200°C beträgt.

12. Geschäumtes NDPE gemäss Anspruch 11, dadurch erhältlich, dass die Temperatur am Sieb 192$^{\circ}$C beträgt.

13. Verfahren zur Herstellung von geschäumtem NDPE gemäss Ansprüchen 1 bis 12, dadurch g e k e n n - z e i c h n e t , dass in einem Extruder

   (a)    zwischen Schneckenspitze und Sieb infolge der Einstellung von Förder- und Leckströmung der sich ausbildende Wirbeldruck konstant, und

   (b)    die Temperatur am Sieb gegenüber der Schneckentemperatur niedriger gehalten wird.

14. Verfahren gemäss Anspruch 13, dadurch g e k e n n - z e i c h n e t , dass das Schäumen in einem adiabatischen Extruder erfolgt.

15. Verfahren gemäss Ansprüchen 13 und 14, dadurch g e k e n n z e i c h n e t , dass das NDPE ganz oder teilweise durch lineares PE mittlerer Dichte (LLDPE) ersetzt wird.

16. Verfahren gemäss Ansprüchen 13 und 14, dadurch g e k e n n z e i c h n e t , dass das NDPE bis zu 30 % durch EVA ersetzt ist.

17. Verfahren gemäss Ansprüchen 13 bis 16, dadurch g e k e n n z e i c h n e t , dass als Treibmittel Azodikarbonamid verwendet wird.

18. Verfahren gemäss Anspruch 17, dadurch g e k e n n - z e i c h n e t , dass die Konzentration von reinem Azodikarbonamid 0,15 bis 0,75 % beträgt.

19. Verfahren gemäss Ansprüchen 13 bis 18, dadurch g e k e n n z e i c h n e t , dass die Temperatur in der Einzugszone 20-40, vorzugsweise $25^{o}$C, beträgt.

20. Verfahren gemäss einem oder mehreren der vorangehenden Ansprüche, dadurch g e k e n n z e i c h - n e t , dass die Schnecke auf $200$ bis $245^{o}$C erwärmt wird.

21. Verfahren gemäss Anspruch 20, dadurch g e k e n n - z e i c h n e t , dass die Schnecke auf $216^{o}$C erwärmt wird.

22. Verfahren gemäss einem oder mehreren der vorangehenden

Ansprüche, dadurch g e k e n n z e i c h n e t , dass die Schneckentemperatur in der Richtung zum Sieb hin abfallend ist.

23. Verfahren gemäss einem oder mehreren der vorangehenden Ansprüche, dadurch g e k e n n z e i c h - n e t , dass die Temperatur am Sieb 180 bis 220°C, vorzugsweise 186 - 200 °C, beträgt.

24. Verfahren gemäss Anspruch 23, dadurch g e k e n n - z e i c h n e t , dass die Temperatur am Sieb 192°C beträgt.

25. Verfahren gemäss einem oder mehreren der vorangehenden Ansprüche, dadurch g e k e n n z e i c h - n e t , dass die Herstellung der Folie als Zweischicht-Folie in einem Koextruder in einem Arbeitsgang extrudiert wird, wobei auf der einen Seite geschäumtes NDPE, auf der anderen Seite ein anderes geeignetes Material extrudiert wird.

26. Verfahren gemäss einem oder mehreren der vorangehenden Ansprüche, dadurch g e k e n n z e i c h - n e t , dass geschäumtes NDPE unter Verwendung eines Haftvermittlers mit anderen Folien nachträglich kaschiert wird.

27. Verwendung von geschäumtem NDPE gemäss einem oder mehreren der vorangehenden Ansprüche, für Verpackungsmaterialien, wie Beutel, Tüten, etc., zur Wärme- bzw. Kälteisolierung beim Transport von gefrorenen oder erwärmten Lebensmitteln etc..

28. Verwendung von geschäumtem NDPE für Baustoffisoliermaterialien.

FIG.1

# FIG. 2

0056276

# FIG.3

20    19    18  17    16    15    14